# EUROPÄISCHE PATENTSCHRIFT

(11) **EP 3 461 676 B1**
(45) Veröffentlichungstag und Bekanntmachung des Hinweises auf die Patenterteilung: **25.08.2021**
(21) Anmeldenummer: 18196950.2
(22) Anmeldetag: 26.09.2018
(51) Int. Cl.: B60L 9/00, H02G 11/00, H04B 3/02

(54) **STROMVERSORGUNGSSYSTEM FÜR EINE FAHRZEUGFLOTTE**
POWER SUPPLY SYSTEM FOR A VEHICLE FLEET
SYSTÈME D'ALIMENTATION EN COURANT POUR UN PARC DE VÉHICULES

(30) Priorität: 29.09.2017 DE 102017217481
(43) Veröffentlichungstag der Anmeldung: 03.04.2019
(73) Patentinhaber: Deere & Company, Moline, IL 61265 (US)
(72) Erfinder: Kegel, Volker, 68163 Mannheim (DE); Tarasinski Dr., Nicolai, 68163 Mannheim (DE); Daubermann, Julian, 68163 Mannheim (DE); Pfaffmann, Simon, 68163 Mannheim (DE)
(74) Vertreter: Dehnhardt, Florian Christopher

(56) Entgegenhaltungen:
- EP-A1- 1 172 322
- DE-C- 645 517
- GB-A- 801 770
- US-A- 4 071 124
- US-A1- 2014 027 228

## Beschreibung

Die Erfindung betrifft ein Stromversorgungssystem für eine Fahrzeugflotte.

Gängige Konzepte zur Versorgung von Fahrzeugen mit elektrischer Energie sehen den Einsatz wiederaufladbarer Fahrzeugbatterien vor. Aufgrund der vor allem im Land- bzw. Baumaschinenbereich geforderten hohen Leistungsdichten werden auch alternative Konzepte verfolgt, bei denen der elektrische Strom leitungsgebunden an das zu versorgende Nutzfahrzeug übertragen wird. Hierbei besteht die Möglichkeit, dem Nutzfahrzeug eine Kabeltrommel mit einer darauf befindlichen elektrischen Leitung zuzuordnen, die mit einer stationären Energieversorgungsstation verbindbar ist. Da die betreffenden Nutzfahrzeuge häufig in Fahrzeugflotten betrieben werden bzw. einen Flottenverband zur Durchführung aufeinander abgestimmter Arbeiten bilden, bedarf es im Falle einer leitungsgebundenen Energieversorgung der Nutzfahrzeuge untereinander einer in entsprechender Weise koordinierten Leitungsführung. Dokumente GB801770A, US4071124A und US2014/027228 offenbaren Stromversorgungssysteme für Fahrzeuge nach dem Stand der Technik.

Es ist daher Aufgabe der vorliegenden Erfindung, ein an die Verwendung in einer Fahrzeugflotte angepasstes Stromversorgungssystem anzugeben.

Diese Aufgabe wird durch ein Stromversorgungssystem für eine Fahrzeugflotte mit den Merkmalen des Patentanspruchs 1 gelöst.

Das Stromversorgungssystem für eine Fahrzeugflotte umfasst eine an einem ersten Flottenfahrzeug anbringbare erste Basisstation und eine an einem zweiten Flottenfahrzeug anbringbare zweite Basisstation, wobei zwischen den beiden Basisstationen ein längenveränderliches Trägerseil gespannt ist, auf dem ein Strom- und/oder Datenübertragungskabel in Schlaufen jeweils fester Länge mittels entlang des Trägerseils verschiebbarer Halteelemente geführt ist.

Auf diese Weise ist es möglich, das Strom- und/oder Datenübertragungskabel mittels des Trägerseils oberhalb des Erdbodens und damit außerhalb der Reichweite mechanischer Einflüsse zu lagern. Da die zwischen den beiden Flottenfahrzeugen wirkenden Zugkräfte vom Trägerseil aufgenommen werden, werden diesbezüglich an die mechanische Belastbarkeit des Strom- und/oder Datenübertragungskabels keine besonderen Anforderungen gestellt. Im Betrieb lässt sich die Länge des Trägerseils im Bereich zwischen einem von den beiden Flottenfahrzeugen einzuhaltenden Mindestabstand sowie einem durch die Gesamtlänge des Strom- und/oder Datenübertragungskabels gegebenen Maximalabstand frei anpassen, was es möglich macht, dynamischen Fahr- oder Wendemanövern der Flottenfahrzeuge entsprechend Rechnung zu tragen. Das Strom- und/oder Datenübertragungskabel ist hierbei entlang des Trägerseils mittels der Halteelemente verschiebbar gelagert, sodass dieses in Schlaufen je nach Länge des Trägerseils mehr oder minder herabhängt. Im ungünstigsten Fall beträgt die Länge der herabhängenden Schlaufen die Hälfte der zwischen den Halteelementen jeweils vorgesehenen Kabellänge. Bei der Festlegung des Anbringungspunkts des Trägerseils an den Flottenfahrzeugen ist dies zu beachten, typischerweise befindet sich dieser in einem Abstand von etwa 4 Metern über dem Erdboden. Das Trägerseil bzw. die beiden Basisstationen können dabei an mit den Flottenfahrzeugen verbundenen Masten befestigt sein.

Das Strom- und/oder Datenübertragungskabel ist üblicherweise als mehradriges Kupfer- bzw. Aluminiumkabel ausgebildet, das optische oder koaxiale Leiter zur breitbandigen Datenübertragung bzw. Echtzeitdatenkommunikation aufweisen kann. Bei dem koaxialen Leiter kann es sich um ein Ethernet-Kabel handeln. Um im Falle der Verwendung einer Wickeltrommel auf den Einsatz aufwändiger Drehkontakte zur Datenübertragung verzichten zu können, ist es vorstellbar, der Wickeltrommel einen (mitrotierenden) Datentransceiver zuzuordnen, der über eine drahtlose Datenaustauschverbindung mit einer Kommunikationseinheit des ersten Flottenfahrzeugs in Verbindung steht, um die an diese übermittelten Daten mittels einer entsprechenden Schnittstelle in den optischen bzw. koaxialen Leiter einzuspeisen bzw. darüber versandte Daten zu empfangen.

Um den größtmöglichen Bewegungsspielraum der beiden Flottenfahrzeuge zueinander sicherzustellen, ist die erste Basisstation bevorzugt in einem Heckbereich des ersten Flottenfahrzeugs und die zweite Basisstation bevorzugt in einem Frontbereich des zweiten Flottenfahrzeugs angebracht.

Der Vollständigkeit halber sei angemerkt, dass sich das erfindungsgemäße Stromversorgungssystem auf eine beliebige Anzahl zusätzlicher Flottenfahrzeuge erweitern lässt, wobei zumindest eines der Flottenfahrzeuge mit Mitteln zur Herstellung einer Stromversorgungsverbindung mit einer stationären Energieversorgungseinrichtung, die sich beispielsweise in Gestalt einer Umspannstation am Rande eines zu bearbeitenden Ackers befindet, ausgerüstet ist. Bei den Mitteln zur Herstellung einer Stromversorgungsverbindung kann es sich um eine Kabeltrommel handeln, wie sie aus der DE 10 2015 202 259 A1 bekannt ist.

Weitere vorteilhafte Weiterbildungen des erfindungsgemäßen Stromversorgungssystems gehen aus den Unteransprüchen hervor.

Vorzugsweise handelt es sich bei den Halteelementen um Gleit- oder Rollführungen, an denen ein jeweiliges Schlaufenende des Strom- und/oder Datenübertragungskabels fest angebracht ist. Die Gleit- oder Rollführungen bestehen insbesondere aus Metall oder hochfestem Kunststoff, wobei an diesen das Strom- und/oder Datenübertragungskabel im Bereich eines Außenmantels festgeklemmt ist. Welche der beiden vorstehenden Ausgestaltungen gewählt wird, hängt unter anderem vom Gewicht des von den Halteelementen zu tragenden Strom- und/oder Datenübertragungskabels ab.

Des Weiteren umfasst die erste Basisstation zur Längenveränderung des Trägerseils eine motorisch antreibbare Wickeltrommel. Die Wickeltrommel weist einen Trommelkörper zur Aufnahme des Trägerseils auf, wobei sich der Trommelkörper durch Ansteuerung eines motorischen Antriebs zum Auf- und Abspulen des Trägerseils in Drehung versetzen lässt. Der motorische Antrieb ist typischerweise als elektrischer Getriebemotor ausgebildet. Eine mit dem elektrischen Getriebemotor zusammenwirkende Einrichtung zur Drehmomentsteuerung ermöglicht die Einhaltung einer vorgegebenen Seilzugspannung, sodass ein übermäßiges Durchhängen des Trägerseils zwischen den Flottenfahrzeugen vermieden werden kann.

Der Wickeltrommel ist ein Drehgeber zur Erfassung einer mittels des motorischen Antriebs ausgeführten Trommelumdrehung zugeordnet, wobei eine Kontrolleinheit aus der Anzahl erfasster Trommelumdrehungen auf einen aktuellen Abstand zwischen den beiden Basisstationen schließt. Diese Abstandsinformationen lassen sich unter anderem dazu nutzen, um die Relativbewegung der beiden Flottenfahrzeuge zu erfassen und durch entsprechendes Eingreifen in eine autonome Fahrzeugsteuerung wunschgemäß zu koordinieren. Andererseits kann auch der sich aus den Abstandsinformationen ergebende Relativabstand der beiden Basisstationen mit der zur Verfügung stehenden Gesamtlänge des Trägerseils bzw. des Strom- und/oder Datenübertragungskabels verglichen werden, wobei bei einem bevorstehenden Überschreiten eines insofern einzuhaltenden Maximalabstands geeignete Gegenmaßnahmen zur Vermeidung einer Beschädigung des Trägerseils bzw. des Strom- und/oder Datenübertragungskabels ergriffen werden können. Zu diesen Maßnahmen kann neben der Ausgabe eines Bedieneralarms ein korrigierender Eingriff in die autonome Fahrzeugsteuerung gehören, gegebenenfalls in Form eines selbsttätig eingeleiteten Notstopps der Flottenfahrzeuge.

Insbesondere ist es auch möglich, dass ein lösbares Verbindungsmittel zum An- und Abkuppeln des Trägerseils sowie des Strom- und/oder Datenübertragungskabels an der zweiten Basisstation vorgesehen ist. Das Verbindungsmittel umfasst typischerweise eine mechanische Kupplung zur lösbaren Anbringung des Trägerseils bzw. eine Kupplungsdose zur Herstellung einer lösbaren elektrischen Verbindung mit einem an dem Strom- und/oder Datenübertragungskabel angeordneten Kupplungsstecker.

Dem Verbindungsmittel kann eine Schaltgeberanordnung zur Erkennung eines Kupplungszustands des Trägerseils sowie des Strom- und/oder Datenübertragungskabels zugeordnet sein. In diesem Fall ist es denkbar, dass eine Betriebsfreigabe der Flottenfahrzeuge ausschließlich dann erfolgt, wenn sich aufgrund des erkannten Kupplungszustands ergibt, dass sowohl das Trägerseil als auch das Strom- und/oder Datenübertragungskabel in zum Gebrauch bestimmter Art und Weise mittels des Verbindungsmittels angebracht sind.

Bei der Schaltgeberanordnung handelt es sich beispielsweise um eine Anordnung von mechanischen Tastschaltern oder berührungslos arbeitenden Induktionsschaltern, die beim Anbringen des Trägerseils an der mechanischen Kupplung bzw. beim Herstellen der elektrischen Verbindung zwischen Kupplungsstecker und Kupplungsdose betätigt werden und eine sich aus dem jeweiligen Schaltzustand ergebende Kupplungszustandsinformation zur Verfügung stellen.

Zusätzlich oder alternativ kann die erste Basisstation ein Dummy-Verbindungselement zur Verwahrung eines an dem Strom- und/oder Datenübertragungskabel vorgesehenen Kupplungssteckers während eines Transports aufweisen. Dies ist unter anderem dann von Belang, wenn der Flottenverband aufgelöst wird, um die einzelnen Flottenfahrzeuge zum nächsten Einsatzort zu bringen. Bei dem Dummy-Verbindungselement handelt es sich im einfachsten Fall um eine mit dem Kupplungsstecker kompatible Blinddose ohne elektrische Funktion, an der sich der Kupplungsstecker des Strom- und/oder Datenübertragungskabels lösbar anbringen lässt. Dies erlaubt es, den Kupplungsstecker während des Transports gegenüber bewegungsbedingten Beschädigungen zu sichern, wobei ein von der Blinddose umfasstes Gehäuse die Kontaktelemente des Kupplungssteckers zugleich schützend umgibt.

Dem Dummy-Verbindungselement kann ein Schaltgeber zur Erkennung eines daran angebrachten Kupplungssteckers zugeordnet sein. Hierbei kann vorgesehen sein, dass eine Betriebsfreigabe des ersten Flottenfahrzeugs ausschließlich dann erfolgt, wenn sich ergibt, dass der Kupplungsstecker an dem als Blinddose ausgebildeten Dummy-Verbindungselement gesichert ist.

Bei dem Schaltgeber kann es sich um einen in die Blinddose eingebauten mechanischen Tastschalter oder berührungslos arbeitenden Induktionsschalter handeln, der von dem an der Blinddose angebrachten Kupplungsstecker betätigt wird.

Das Trägerseil besteht in der Regel aus einer Vielzahl von Metalldrähten und/oder hochfesten Kunststofffasern. In letzterem Fall lässt sich gegenüber der Verwendung von Metalldrähten bei gleicher Zugbelastbarkeit ein dünneres und leichteres Trägerseil verwirklichen, was es erlaubt, einen entsprechend größeren Seilvorrat auf der Wickeltrommel unterzubringen. Bei den Kunststoffasern handelt es sich im Allgemeinen um Aramid- oder Kevlarfasern, deren isolierende Eigenschaften zudem einen erhöhten Schutz gegenüber Blitzeinschlägen bieten.

Zur Erhöhung des Sicherheitsabstands gegenüber dem stromführenden Strom- und/oder Datenübertragungskabel ist an wenigstens einer der beiden Basisstationen eine Schleppkette angebracht, wobei das Trägerseil an einem freien Schleppkettenende mittels der Wickeltrommel bzw. dem lösbaren Verbindungsmittel befestigt ist. Die Schleppkette bildet auf diese Weise einen Distanzhalter zwischen dem betreffenden Flottenfahrzeug und dem Strom- und/oder Datenübertragungskabel, da der Abstand zwischen dem Flottenfahrzeug und den herabhängenden Schlaufen des Strom- und/oder Datenübertragungskabels um die Länge der Schleppkette vergrößert wird.

Im Gegensatz zu einer konventionellen Gliederkette besteht die Schleppkette aus einer Vielzahl aneinandergereihter Segmente, die über zwischenliegende Scharniere bzw. Gelenke miteinander schwenkbar verbunden sind. Die Scharniere bzw. Gelenke können derart ausgelegt sein, dass ein durch die zulässige Biegebeanspruchung des in der Schleppkette geführten Strom- und/oder Datenübertragungskabels gegebener Mindestradius nicht unterschritten werden kann. Die Scharniere bzw. Gelenke sind bevorzugt kardanisch ausgebildet, sodass die Schleppkette den Bewegungen des Trägerseils in beliebiger Schwenkrichtung zu folgen vermag.

Im Hinblick auf die Verwirklichung einer autonomen Fahrzeugsteuerung, zum Beispiel im Rahmen eines übergeordneten Flottenmanagementsystems, ist neben der Kenntnis der Relativbewegung der Flottenfahrzeuge deren räumliche Orientierung zueinander von Bedeutung. Es ist daher denkbar, dass eine Sensoreinrichtung zur Erfassung eines räumlichen Verlaufs des Trägerseils gegenüber der ersten und/oder zweiten Basisstation vorhanden ist, wobei die Kontrolleinheit aus dem erfassten räumlichen Verlauf des Trägerseils unmittelbar auf die räumliche Orientierung der Flottenfahrzeuge zueinander schließt. Im einfachsten Fall kann es sich bei der Sensoreinrichtung um einen der jeweiligen Basisstation zugeordneten Winkelsensor handeln, der die Orientierung eines dem Verlauf des Trägerseils folgenden Tastfühlers aufnimmt. Sollte eine Schleppkette vorgesehen sein, so kann jedem der Scharniere bzw. Gelenke ein eigener Winkelsensor zugeordnet sein. Dies trägt dem Umstand Rechnung, dass die Schleppkette aufgrund der begrenzten Beweglichkeit der einzelnen Segmente nicht zwangsläufig einen dem Trägerseil folgenden geraden Verlauf aufweisen muss, sodass sich durch Erfassung der Orientierung lediglich eines einzelnen der Segmente nicht auf den tatsächlichen Verlauf des Trägerseils gegenüber dem jeweiligen Flottenfahrzeug schließen ließe. Ist jedem der Scharniere bzw. Gelenke ein eigener Winkelsensor zugeordnet, so ist im Bereich der Schleppkette zugleich eine Überwachung des für das Strom- und/oder Datenübertragungskabel einzuhaltenden Mindestbiegeradius möglich, wobei gegebenenfalls geeignete Gegenmaßnahmen zur Vermeidung eines Abknickens des Strom- und/oder Datenübertragungskabels auf Grundlage korrigierender Eingriffe in die autonome Fahrzeugsteuerung durchgeführt werden können.

Des Weiteren ist es vorstellbar, dass die Halteelemente nach dem Abkuppeln des Strom- und/oder Datenübertragungskabels an der ersten Basisstation verstaubar sind. Zu diesem Zweck können die Halteelemente nach dem Lösen der elektrischen Steckverbindung entlang des Trägerseils ineinander schiebbar und mittels eines Sicherungselements in einer an der ersten Basisstation vorgesehenen Endposition arretierbar sein. Anschließend wird die mechanische Kupplung des Trägerseils gelöst und dieses auf die Wickeltrommel aufgespult.

Um das Verstauen des vergleichsweise schweren Strom- und/oder Datenübertragungskabels (dieses wiegt typischerweise bis zu 150 kg) zu vereinfachen, können die Halteelemente nach dem Abkuppeln des Strom- und/oder Datenübertragungskabels mittels einer Rückholeinrichtung an der ersten Basisstation verstaubar sein. Die Rückholeinrichtung umfasst ein mit dem äußersten Halteelement verbundenes Rückholseil, das auf einer weiteren motorisch antreibbaren Wickeltrommel aufspulbar ist, wobei das äußerste Halteelement die inneren Halteelemente entlang seines Wegs in Richtung der Endposition an der ersten Basisstation mitnimmt und sich dort arretieren lässt.

Das erfindungsgemäße Stromversorgungssystem wird im Folgenden anhand der beigefügten Zeichnungen näher erläutert. Dabei sind hinsichtlich ihrer Funktion übereinstimmende bzw. vergleichbare Komponenten mit denselben Bezugszeichen gekennzeichnet. Es zeigen:
- Fig. 1: ein erstes Ausführungsbeispiel des erfindungsgemäßen Stromversorgungssystems für eine Fahrzeugflotte, und
- Fig. 2: ein zweites Ausführungsbeispiel des erfindungsgemäßen Stromversorgungssystems für eine Fahrzeugflotte.

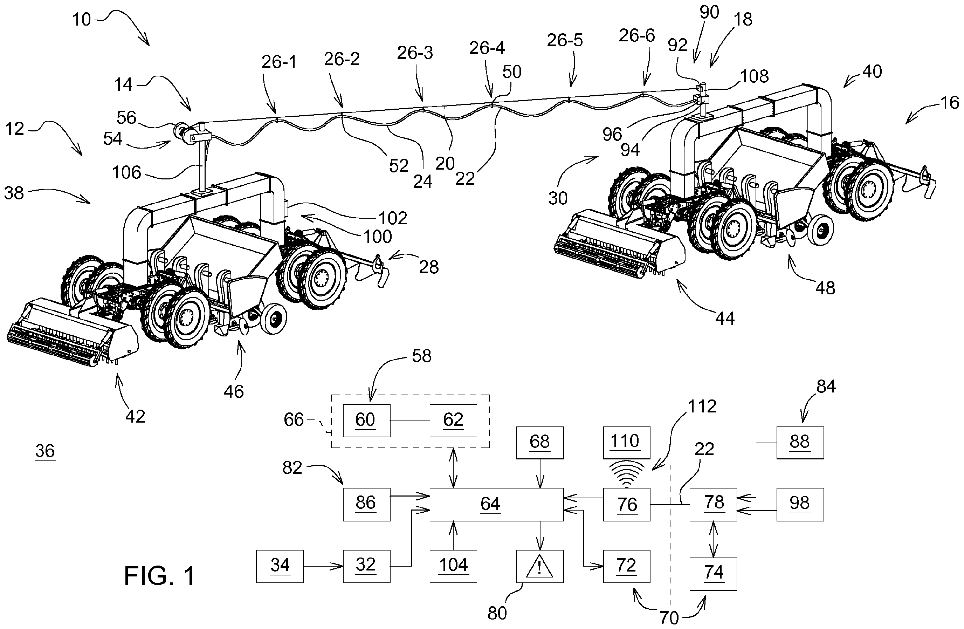

Fig. 1 zeigt ein erstes Ausführungsbeispiel des erfindungsgemäßen Stromversorgungssystems für eine Fahrzeugflotte.

Das Stromversorgungssystem 10 umfasst eine an einem ersten Flottenfahrzeug 12 angebrachte erste Basisstation 14 und eine an einem zweiten Flottenfahrzeug 16 angebrachte zweite Basisstation 18. Das erste Flottenfahrzeug 12 bildet ein Leitfahrzeug und das zweite Flottenfahrzeug 16 ein von diesem gesteuertes bzw. überwachtes Folgefahrzeug innerhalb der in Fig. 1 dargestellten Fahrzeugflotte. Zwischen den beiden Basisstationen 14, 18 ist ein längenveränderliches Trägerseil 20 gespannt, auf dem ein Strom- und/oder Datenübertragungskabel 22 in Schlaufen 24 jeweils fester Länge mittels entlang des Trägerseils 20 verschiebbarer Halteelemente 26-1,...,26-6 geführt ist.

Die erste Basisstation 14 ist in einem Heckbereich 28 des ersten Flottenfahrzeugs 12 und die zweite Basisstation 16 ist in einem Frontbereich 30 des zweiten Flottenfahrzeugs 16 angebracht.

Zumindest eines der Flottenfahrzeuge 12, 16 ist mit Mitteln zur Herstellung einer Stromversorgungsverbindung 32 mit einer stationären Energieversorgungseinrichtung 34, die sich beispielsweise in Gestalt einer Umspannstation am Rande eines zu bearbeitenden Ackers 36 befindet, ausgerüstet. Bei den Mitteln zur Herstellung einer Stromversorgungsverbindung 32 handelt es sich zum Beispiel um eine Kabeltrommel, wie sie aus der DE 10 2015 202 259 A1 bekannt ist.

Beispielsgemäß besteht die in Fig. 1 dargestellte Fahrzeugflotte aus lediglich zwei Flottenfahrzeugen 12, 16, der Vollständigkeit halber sei jedoch angemerkt, dass sich das Stromversorgungssystem 10 auf eine beliebige Anzahl zusätzlicher Flottenfahrzeuge erweitern lässt.

Im vorliegenden Fall sind die Flottenfahrzeuge 12, 16 als autonom fahrende landwirtschaftliche Traktoren 38, 40 ausgebildet, an denen diverse landwirtschaftliche Anbaugeräte 42, 44, 46, 48 anbringbar sind. Letztere sind in Fig. 1 durch einen Grubber mit einer nachfolgenden Säeinheit veranschaulicht.

Bei den Halteelementen 26-1,...,26-6 handelt es sich um jeweils identisch aufgebaute Gleit- oder Rollführungen 50, an denen ein jeweiliges Schlaufenende 52 des Strom- und/oder Datenübertragungskabels 22 fest angebracht ist. Die Gleit- oder Rollführungen 50 bestehen aus Metall oder hochfestem Kunststoff, wobei an diesen das Strom- und/oder Datenübertragungskabel 22 im Bereich eines Außenmantels festgeklemmt ist. Welche der beiden vorstehenden Ausgestaltungen gewählt wird, hängt unter anderem vom Gewicht des von den Halteelementen 26-1,...,26-6 zu tragenden Strom- und/oder Datenübertragungskabels 22 ab.

Des Weiteren umfasst die erste Basisstation 14 zur Längenveränderung des Trägerseils 20 eine motorisch antreibbare Wickeltrommel 54. Die Wickeltrommel 54 weist einen Trommelkörper 56 zur Aufnahme des Trägerseils 20 auf, wobei sich der Trommelkörper 56 durch Ansteuerung eines motorischen Antriebs 58 zum Auf- und Abspulen des Trägerseils 20 in Drehung versetzen lässt. Der motorische Antrieb 58 ist hierbei als elektrischer Getriebemotor 60 ausgebildet. Eine mit dem elektrischen Getriebemotor 60 zusammenwirkende Einrichtung zur Drehmomentsteuerung 62 ermöglicht die Einhaltung einer vorgegebenen Seilspannung, sodass ein übermäßiges Durchhängen des Trägerseils 20 zwischen den Flottenfahrzeugen 12, 16 vermieden werden kann. Die Einrichtung zur Drehmomentsteuerung 62 ist Bestandteil einer mit einer Kontrolleinheit 64 in Verbindung stehenden elektrischen Motorsteuerung 66.

Zusätzlich ist der Wickeltrommel 54 ein Drehgeber 68 zur Erfassung einer mittels des elektrischen Getriebemotors 60 ausgeführten Trommelumdrehung zugeordnet, wobei die Kontrolleinheit 64 aus der Anzahl erfasster Trommelumdrehungen auf einen aktuellen Abstand zwischen den beiden Basisstationen 14, 18 schließt. Diese Abstandsinformationen werden von der Kontrolleinheit 64 genutzt, um die Relativbewegung der beiden Flottenfahrzeuge 12, 16 zu erfassen und durch entsprechendes Eingreifen in eine autonome Fahrzeugsteuerung 70 im Rahmen eines übergeordneten Flottenmanagementsystems wunschgemäß zu koordinieren. Jedem der beiden Flottenfahrzeuge 12, 16 ist ein Teilsystem 72, 74 der autonomen Fahrzeugsteuerung 70 zugeordnet, wobei die beiden Teilsysteme 72, 74 über das Strom- und/oder Datenübertragungskabel 22 unter Verwendung zugehöriger Kommunikationseinheiten 76, 78 in Austausch miteinander stehen.

Zugleich nimmt die Kontrolleinheit 64 einen Vergleich des sich aus den Abstandsinformationen ergebenden Relativabstands der beiden Basisstationen 14, 18 mit der zur Verfügung stehenden Gesamtlänge des Trägerseils 20 bzw. des Strom- und/oder Datenübertragungskabels 22 vor, wobei von der Kontrolleinheit 64 bei einem bevorstehenden Überschreiten eines insofern einzuhaltenden Maximalabstands geeignete Gegenmaßnahmen zur Vermeidung einer Beschädigung des Trägerseils 20 bzw. des Strom- und/oder Datenübertragungskabels 22 ergriffen werden. Zu diesen Maßnahmen gehört neben der Ausgabe eines Bedieneralarms durch Ansteuerung eines Signalgebers 80 ein korrigierender Eingriff in die autonome Fahrzeugsteuerung 70, gegebenenfalls in Form eines selbsttätig eingeleiteten Notstopps der Flottenfahrzeuge 12, 16.

Zur Koordinierung der Flottenfahrzeuge 12, 16 benötigt die autonome Fahrzeugsteuerung 70 zusätzlich Informationen bezüglich der räumlichen Orientierung der Flottenfahrzeug 12, 16 zueinander. Es ist daher eine Sensoreinrichtung 82, 84 zur Erfassung eines räumlichen Verlaufs des Trägerseils 20 gegenüber der ersten und/oder zweiten Basisstation 14, 18 vorhanden, wobei die Kontrolleinheit 64 aus dem erfassten räumlichen Verlauf des Trägerseils 20 unmittelbar auf die räumliche Orientierung der Flottenfahrzeuge 12, 16 zueinander schließt. Im Falle des dargestellten Ausführungsbeispiels handelt es sich bei der Sensoreinrichtung 82, 84 um einen der jeweiligen Basisstation 14, 18 zugeordneten Winkelsensor 86, 88, der die Orientierung eines dem Verlauf des Trägerseils 20 folgenden Tastfühlers aufnimmt (nicht dargestellt). Der von der zweiten Basisstation 18 umfasste Winkelsensor 88 steht hierbei mittels der beiden Kommunikationseinheiten 76, 78 über das Strom- und/oder Datenübertragungskabel 22 mit der Kontrolleinheit 64 in Verbindung.

Gemäß der Darstellung des Stromversorgungssystems 10 in Fig. 1 ist an der zweiten Basisstation 18 ein lösbares Verbindungsmittel 90 zum An- und Abkuppeln des Trägerseils 20 sowie des Strom- und/oder Datenübertragungskabels 22 vorgesehen. Das Verbindungsmittel 90 umfasst eine nicht näher gezeigte mechanische Kupplung 92 zur lösbaren Anbringung des Trägerseils 20 bzw. eine Kupplungsdose 94 zur Herstellung einer lösbaren elektrischen Verbindung mit einem an dem Strom- und/oder Datenübertragungskabel 22 angeordneten Kupplungsstecker 96.

Dem Verbindungsmittel 90 ist eine Schaltgeberanordnung 98 zur Erkennung eines Kupplungszustands des Trägerseils 20 sowie des Strom- und/oder Datenübertragungskabels 22 zugeordnet. In diesem Fall erfolgt eine Betriebsfreigabe der Flottenfahrzeuge 12, 16 seitens der Kontrolleinheit 64 ausschließlich dann, wenn sich aufgrund des erkannten Kupplungszustands ergibt, dass sowohl das Trägerseil 20 als auch das Strom- und/oder Datenübertragungskabel 22 in zum Gebrauch bestimmter Art und Weise mittels des Verbindungsmittels 90 angebracht sind.

Bei der Schaltgeberanordnung 98 handelt es sich um eine Anordnung von mechanischen Tastschaltern oder berührungslos arbeitenden Induktionsschaltern, die beim Anbringen des Trägerseils 20 an der mechanischen Kupplung 92 bzw. beim Herstellen der elektrischen Verbindung zwischen Kupplungsstecker 96 und Kupplungsdose 94 betätigt werden und der Kontrolleinheit 64 eine sich aus dem jeweiligen Schaltzustand ergebende Kupplungszustandsinformation zur Verfügung stellen. Dabei werden die Kupplungszustandsinformationen mittels der beiden Kommunikationseinheiten 76, 78 über das Strom- und/oder Datenübertragungskabel 22 an die Kontrolleinheit 64 übermittelt.

Ein der ersten Basisstation 14 zugeordnetes Dummy-Verbindungselement 100 erlaubt es, den an dem Strom- und/oder Datenübertragungskabel 22 vorgesehenen Kupplungsstecker 96 während eines Transports zu verwahren. Dies ist unter anderem dann von Belang, wenn der Flottenverband aufgelöst wird, um die einzelnen Flottenfahrzeuge 12, 16 zum nächsten Einsatzort zu bringen. Bei dem Dummy-Verbindungselement 100 handelt es sich um eine mit dem Kupplungsstecker 96 kompatible Blinddose 102 ohne elektrische Funktion, an der sich der Kupplungsstecker 96 des Strom- und/oder Datenübertragungskabels 22 lösbar anbringen lässt. Dies erlaubt es, den Kupplungsstecker 96 während des Transports gegenüber bewegungsbedingten Beschädigungen zu sichern, wobei ein von der Blinddose 102 umfasstes Gehäuse die Kontaktelemente des Kupplungssteckers 96 zugleich schützend umgibt.

Der Blinddose 102 ist ein Schaltgeber 104 zur Erkennung eines daran angebrachten Kupplungssteckers 96 zugeordnet. Eine Betriebsfreigabe des ersten Flottenfahrzeugs 12 erfolgt seitens der Kontrolleinheit 64 ausschließlich dann, wenn sich aufgrund einer von dem Schaltgeber 104 bereitgestellten Steckzustandsinformation ergibt, dass der Kupplungsstecker 96 an der Blinddose 102 gesichert ist. Bei dem Schaltgeber 104 handelt es sich um einen in der Blinddose 102 eingebauten mechanischen Tastschalter oder einen berührungslos arbeitenden Induktionsschalter der von dem an der Blinddose 102 angebrachten Kupplungsstecker 96 betätigt wird.

Das Stromversorgungssystem 10 ermöglicht es, das Strom- und/oder Datenübertragungskabel 22 mittels des Trägerseils 20 oberhalb des Erdbodens und damit außerhalb der Reichweite mechanischer Einflüsse zu lagern. Da die zwischen den beiden Flottenfahrzeugen 12, 16 wirkenden Zugkräfte vom Trägerseil 20 aufgenommen werden, werden diesbezüglich an die mechanische Belastbarkeit des Strom- und/oder Datenübertragungskabels 22 keine besonderen Anforderungen gestellt. Im Betrieb lässt sich die Länge des Trägerseils 20 im Bereich zwischen einem von den beiden Flottenfahrzeugen 12, 16 einzuhaltenden Mindestabstand sowie einem durch die Gesamtlänge des Strom- und/oder Datenübertragungskabels 22 gegebenen Maximalabstand frei anpassen, was es möglich macht, dynamischen Fahr- oder Wendemanövern der Flottenfahrzeuge 12, 16 entsprechend Rechnung zu tragen. Das Strom- und/oder Datenübertragungskabel 22 ist hierbei entlang des Trägerseils 20 mittels der Halteelemente 26-1,...,26-6 verschiebbar gelagert, sodass dessen Schlaufen 24 je nach Länge des Trägerseils 20 mehr oder minder herabhängen. Angesichts dessen befindet sich der Anbringungspunkt des Trägerseils 20 typischerweise in einem Abstand von 4 Metern über dem Erdboden, das Trägerseil 20 bzw. die beiden Basisstationen 14, 18 sind dabei an mit den Flottenfahrzeugen 12, 16 verbundenen Masten 106, 108 befestigt.

Das Trägerseil 20 besteht aus einer Vielzahl von Metalldrähten und/oder hochfesten Kunststofffasern. Bei den hochfesten Kunststoffasern handelt es sich um Aramid- und/oder Kevlarfasern.

Das Strom- und/oder Datenübertragungskabel 22 ist als mehradriges Kupfer- oder Aluminiumkabel ausgebildet, das ebenfalls optische oder koaxiale Leiter zur breitbandigen Datenübertragung bzw. Echtzeitdatenkommunikation aufweist. Bei dem koaxialen Leiter handelt es sich um ein Ethernet-Kabel. Um im Hinblick auf die Verwendung der Wickeltrommel 54 auf den Einsatz aufwändiger Drehkontakte zur Datenübertragung verzichten zu können, ist der Wickeltrommel 54 ein (mitrotierender) Datentransceiver 110 zugeordnet, der über eine drahtlose Datenaustauschverbindung 112 mit der Kommunikationseinheit 76 des ersten Flottenfahrzeugs 12 in Verbindung steht, um die an diese übermittelten Daten mittels einer entsprechenden Schnittstelle in den optischen bzw. koaxialen Leiter einzuspeisen bzw. darüber versandte Daten zu empfangen.

Die 26-1,...,26-6 sind nach dem Trennen der elektrischen Verbindung des Strom- und/oder Datenübertragungskabels 22 an der ersten Basisstation 14 verstaubar. Zu diesem Zweck sind die Halteelemente 26-1,...,26-6 nach dem Lösen der elektrischen Steckverbindung entlang des Trägerseils 20 ineinander schiebbar und mittels eines (nicht dargestellten) Sicherungselements in einer an der ersten Basisstation 14 vorgesehenen Endposition arretierbar. Anschließend wird die mechanische Kupplung 92 des Trägerseils 20 gelöst und dieses auf die Wickeltrommel 54 aufgespult.

Um das Verstauen des vergleichsweise schweren Strom- und/oder Datenübertragungskabels 22 (dieses wiegt typischerweise bis zu 150 kg) zu vereinfachen, sind die Halteelemente 26-1,...,26-6 nach dem Abkuppeln des Strom- und/oder Datenübertragungskabels 22 optional mittels einer der ersten Basisstation 14 zugeordneten (nicht dargestellten) Rückholeinrichtung an der ersten Basisstation 14 verstaubar. Die Rückholeinrichtung umfasst ein mit dem äußersten Halteelement 26-1 verbundenes Rückholseil, das auf einer weiteren motorisch antreibbaren Wickeltrommel aufspulbar ist, wobei das äußerste Halteelement 26-1 die inneren Halteelemente 26-2,...,26-6 entlang seines Wegs in Richtung der Endposition an der ersten Basisstation 14 mitnimmt und sich dort arretieren lässt.

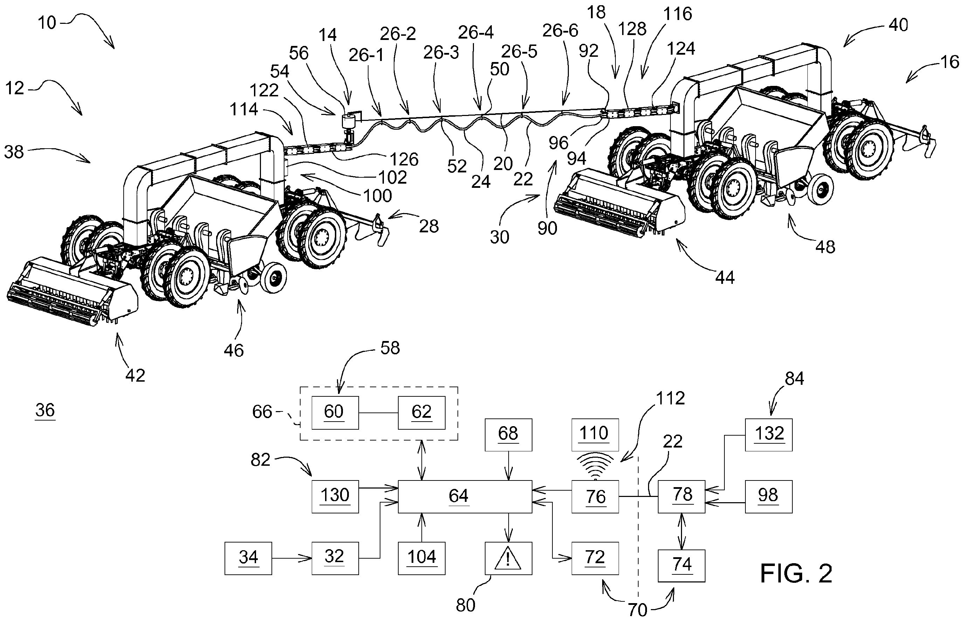

Fig. 2 zeigt ein zweites Ausführungsbeispiel des erfindungsgemäßen Stromversorgungssystems. Dieses unterscheidet sich von dem ersten Ausführungsbeispiel bezüglich der Anbringung der Basisstationen 14, 18 am jeweiligen Flottenfahrzeug 12, 16.

Demgemäß ist zur Erhöhung des Sicherheitsabstands gegenüber dem stromführenden Strom- und/oder Datenübertragungskabel 22 an beiden Basisstationen 14, 18 eine Schleppkette 114, 116 angebracht, wobei das Trägerseil 20 an einem freien Schleppkettenende 118, 120 mittels der Wickeltrommel 54 bzw. dem lösbaren Verbindungsmittel 90 befestigt ist. Die Schleppkette 114, 116 bildet auf diese Weise einen Distanzhalter zwischen dem betreffenden Flottenfahrzeug 12, 14 und dem Strom- und/oder Datenübertragungskabel 22, da der Abstand zwischen dem Flottenfahrzeug 12, 16 und den herabhängenden Schlaufen 24 des Strom- und/oder Datenübertragungskabels 22 um die Länge der Schleppkette 118, 120 vergrößert wird.

Im Gegensatz zu einer konventionellen Gliederkette besteht die Schleppkette 118, 120 aus einer Vielzahl aneinandergereihter Segmente 122, 124, die über zwischenliegende Scharniere bzw. Gelenke 124 miteinander schwenkbar verbunden sind. Die Scharniere bzw. Gelenke 126, 128 sind derart ausgelegt, dass ein durch die zulässige Biegebeanspruchung des in der Schleppkette 118, 120 geführten Strom- und/oder Datenübertragungskabels 22 gegebener Mindestradius nicht unterschritten werden kann. Die Scharniere bzw. Gelenke 126, 128 sind kardanisch ausgebildet, sodass die Schleppkette 118, 120 den Bewegungen des Trägerseils 20 in beliebiger Schwenkrichtung zu folgen vermag.

Auch die Ausbildung der Sensoreinrichtung 82, 84 unterscheidet sich gegenüber derjenigen des ersten Ausführungsbeispiels. So ist im vorliegenden Fall jedem der Scharniere bzw. Gelenke 126, 128 der Schleppkette 118, 120 ein eigener Winkelsensor 130, 132 zugeordnet. Dies trägt dem Umstand Rechnung, dass die Schleppkette 118, 120 aufgrund der begrenzten Beweglichkeit der einzelnen Segmente 122, 124 zueinander nicht zwangsläufig einen dem Trägerseil 20 folgenden geraden Verlauf aufweisen muss, sodass sich durch Erfassung der Orientierung lediglich eines einzelnen der Segmente 122, 124 nicht auf den tatsächlichen Verlauf des Trägerseils 20 gegenüber dem jeweiligen Flottenfahrzeug 12, 16 schließen ließe.

Ist wie hier jedem der Scharniere bzw. Gelenke 126, 128 ein eigener Winkelsensor 130, 132 zugeordnet, so ist im Bereich der Schleppkette 118, 120 zugleich eine Überwachung des für das Strom- und/oder Datenübertragungskabel 22 einzuhaltenden Mindestbiegeradius möglich, wobei seitens der Kontrolleinheit 64 gegebenenfalls geeignete Gegenmaßnahmen zur Vermeidung eines Abknickens des Strom- und/oder Datenübertragungskabels 22 auf Grundlage korrigierender Eingriffe in die autonome Fahrzeugsteuerung 70 vorgenommen werden.

## Patentansprüche

1. Stromversorgungssystem für eine Fahrzeugflotte, mit einer an einem ersten Flottenfahrzeug (12) anbringbaren ersten Basisstation (14) und einer an einem zweiten Flottenfahrzeug (16) anbringbaren zweiten Basisstation (18), wobei zwischen den beiden Basisstationen (14, 18) ein längenveränderliches Trägerseil (20) gespannt ist, auf dem ein Stromübertragungskabel (22) in Schlaufen (24) jeweils fester Länge mittels entlang des Trägerseils (20) verschiebbarer Halteelemente (26-1 ,...,26-6) geführt ist, **dadurch gekennzeichnet, dass** die erste Basisstation (14) zur Längenveränderung des Trägerseils (20) eine mittels eines motorischen Antriebs (58) in Drehung versetzbare Wickeltrommel (54) umfasst, wobei das Stromversorgungssystem (10) ferner eine Kontrolleinheit (64) und einen der Wickeltrommel (54) zugeordneten Drehgeber (68) zur Erfassung einer mittels des motorischen Antriebs (58) ausgeführten Trommelumdrehung aufweist, wobei die Kontrolleinheit (64) aus der Anzahl erfasster Trommelumdrehungen auf einen aktuellen Abstand zwischen den beiden Basisstationen (14, 18) schließt.

2. Stromversorgungssystem nach Anspruch 1, **dadurch gekennzeichnet, dass** es sich bei den Halteelementen (26-1,...,26-6) um Gleit- oder Rollführungen (50) handelt, an denen ein jeweiliges Schla2ufenende (52) des Stromübertragungskabels (22) fest angebracht ist.

3. Stromversorgungssystem nach wenigstens einem der Ansprüche 1 bis 2, **dadurch gekennzeichnet, dass** ein Verbindungsmittel (90) zum An- und Abkuppeln des Trägerseils (20) sowie des Stromübertragungskabels (22) an der zweiten Basisstation (18) vorgesehen ist.

4. Stromversorgungssystem nach Anspruch 3, **gekennzeichnet durch** eine dem Verbindungsmittel (90) zugeordnete Schaltgeberanordnung (98) zur Erkennung eines Kupplungszustands des Trägerseils (20) sowie des Stromübertragungskabels (22).

5. Stromversorgungssystem nach Anspruch 3 oder 4, **dadurch gekennzeichnet, dass** die erste Basisstation (14) ein Dummy-Verbindungselement (100) zur Verwahrung eines an dem Stromübertragungskabel (22) vorgesehenen Kupplungssteckers (96) während eines Transports aufweist.

6. Stromversorgungssystem nach Anspruch 5, **gekennzeichnet durch** einen dem Dummy-Verbindungselement (100) zugeordneten Schaltgeber (104) zur Erkennung eines daran angebrachten Kupplungssteckers (96).

7. Stromversorgungssystem nach wenigstens einem der Ansprüche 1 bis 6, **dadurch gekennzeichnet, dass** das Trägerseil (20) aus einer Vielzahl von Metalldrähten und/oder hochfesten Kunststofffasern besteht.

8. Stromversorgungssystem nach wenigstens einem der Ansprüche 1 bis 7, **gekennzeichnet durch** eine an wenigstens einer der beiden Basisstationen (14, 18) angebrachte Schleppkette (114, 116), wobei das Trägerseil (20) an einem freien Schleppkettenende (114, 116), insbesondere mittels der Wickeltrommel (54) nach Anspruch 1 oder dem Verbindungsmittel (90) nach Anspruch 3, befestigt ist.

9. Stromversorgungssystem nach wenigstens einem der Ansprüche 1 bis 8, **gekennzeichnet durch** eine Sensoreinrichtung (82, 84) zur Erfassung eines räumlichen Verlaufs des Trägerseils (20) gegenüber der ersten und/oder zweiten Basisstation (14, 18) vorhanden ist, wobei die Kontrolleinheit (64) aus dem erfassten räumlichen Verlauf des Trägerseils (20) auf die räumliche Orientierung der Flottenfahrzeuge (12, 16) zueinander schließt.

10. Stromversorgungssystem nach wenigstens einem der Ansprüche 1 bis 9, **dadurch gekennzeichnet, dass** die Halteelemente (26-1,...,26-6) nach dem Abkuppeln des Stromübertragungskabels (20) an der ersten Basisstation (14) verstaubar sind.

11. Stromversorgungssystem nach wenigstens einem der Ansprüche 1 bis 10, **dadurch gekennzeichnet, dass** die Halteelemente (26-1,...,26-6) nach dem Abkuppeln des Stromübertragungskabels (20) mittels einer der ersten Basisstation (14) zugeordneten Rückholeinrichtung an der ersten Basisstation (14) verstaubar sind.

12. Fahrzeugflotte mit wenigstens einem ersten und zweiten Flottenfahrzeug (12, 16), wobei die Flottenfahrzeuge mit einem Stromversorgungssystem (10) nach wenigstens einem der Ansprüche 1 bis 11 ausgestattet sind.

## Claims

1. Electric power supply system for a vehicle fleet, comprising a first base station (14) that can be attached to a first fleet vehicle (12), and a second base station (18) that can be attached to a second fleet vehicle (16), there being spanned between the two base stations (14, 18) a carrier rope (20) that is variable in length and on which an electric power transmission cable (22) is run in loops (24), of fixed length in each case, by means of holding elements (26-1,...,26-6) that are displaceable along the carrier rope (20), **characterized in that**, for the purpose of altering the length of the carrier rope (20), the first base station (14) comprises a winding drum (54) that can be driven in rotation by means of a motor drive (58), the electric power supply system (10) further having a control unit (64) and a rotary position transducer (68), assigned to the winding drum (54), for acquiring a drum rotation executed by means of the motor drive (58), the control unit (64) extrapolating, from the number of acquired drum rotations, a current distance between the two base stations (14, 18).

2. Electric power supply system according to Claim 1, **characterized in that** the holding elements (26-1,...,26-6) are sliding or rolling guides (50), to which a respective loop end (52) of the electric power transmission cable (22) is fixedly attached.

3. Electric power supply system according to at least one of Claims 1 and 2, **characterized in that** a connection means (90), for coupling and decoupling the carrier rope (20) and the electric power transmission cable (22), is provided on the second base station (18).

4. Electric power supply system according to Claim 3, **characterized by** a switching transducer arrangement (98), assigned to the connection means (90), for identifying a coupling state of the carrier rope (20) and of the electric power transmission cable (22).

5. Electric power supply system according to Claim 3 or 4, **characterized in that** the first base station (14) has a dummy connection element (100) for storing, during transport, a coupling plug (96) provided on the electric power transmission cable (22).

6. Electric power supply system according to Claim 5, **characterized by** a switching transducer (104), assigned to the dummy connection element (100), for identifying a coupling plug (96) attached thereto.

7. Electric power supply system according to at least one of Claims 1 to 6, **characterized in that** the carrier rope (20) is composed of a multiplicity of metal wires and/or high-strength plastic fibres.

8. Electric power supply system according to at least one of Claims 1 to 7, **characterized by** a drag chain (114, 116), attached to at least one of the two base stations (14, 18), the carrier rope (20) being fastened to a free drag chain end (114, 116), in particular by means of the winding drum (54) according to Claim 1, or to the connection means (90) according to Claim 3.

9. Electric power supply system according to at least one of Claims 1 to 8, **characterized by** a sensor device (82, 84) for acquiring a spatial course of the carrier rope (20) relative to the first and/or second base station (14, 18), the control unit (64) extrapolating, from the acquired spatial course of the carrier rope (20), the spatial orientation of the fleet vehicles (12, 16) in relation to each other.

10. Electric power supply system according to at least one of Claims 1 to 9, **characterized in that** the holding elements (26-1,...,26-6), following the decoupling of the electric power transmission cable (20), can be stowed on the first base station (14).

11. Electric power supply system according to at least one of Claims 1 to 10, **characterized in that** the holding elements (26-1,...,26-6), following the decoupling of the electric power transmission cable (20), can be stowed on the first base station (14) by means of a return device assigned to the first base station (14).

12. Vehicle fleet comprising at least one first and second fleet vehicle (12, 16), the fleet vehicles being equipped with an electric power supply system (10) according to at least one of Claims 1 to 11.

## Revendications

1. Système d'alimentation en courant pour une flotte de véhicules, comprenant une première station de base (14) pouvant être montée sur un premier véhicule de flotte (12) et une deuxième station de base (18) pouvant être montée sur un deuxième véhicule de flotte (16), un câble de support (20) de longueur variable étant tendu entre les deux stations de base (14, 18), sur lequel un câble de transmission de courant (22) est guidé en boucles (24) de longueur fixe respectivement au moyen d'éléments de maintien (26-1, ..., 26-6) coulissant le long du câble de support (20),
**caractérisé en ce que** pour faire varier la longueur du câble de support (20), la première station de base (14) comprend une poulie d'enroulement (54) pouvant être mise en rotation au moyen d'un entraînement motorisé (58), le système d'alimentation en courant (10) présentant en outre une unité de contrôle (64) et un encodeur rotatif (68) associé à la poulie d'enroulement (54) pour détecter un tour de poulie effectué au moyen de l'entraînement motorisé (58), l'unité de contrôle (64) déduisant du nombre de tours de poulie détectés une distance actuelle entre les deux stations de base (14, 18) .

2. Système d'alimentation en courant selon la revendication 1, **caractérisé en ce que** les éléments de maintien (26-1, ..., 26-6) sont des guidages coulissants ou roulants (50) auxquels une extrémité de boucle (52) respective du câble de transmission de courant (22) est montée solidement.

3. Système d'alimentation en courant selon au moins l'une des revendications 1 et 2, **caractérisé en ce qu'**un moyen de liaison (90) pour accrocher et décrocher le câble de support (20) ainsi que le câble de transmission de courant (22) est prévu sur la deuxième station de base (18) .

4. Système d'alimentation en courant selon la revendication 3, **caractérisé par** un ensemble d'encodeurs à commutation (98) associé au moyen de liaison (90) pour identifier un état d'accouplement du câble de support (20) ainsi que du câble de transmission de courant (22).

5. Système d'alimentation en courant selon la revendication 3 ou 4, **caractérisé en ce que** la première station de base (14) présente un élément de liaison factice (100) pour ranger un connecteur de couplage (96) prévu sur le câble de transmission de courant (22) pendant le transport.

6. Système d'alimentation en courant selon la revendication 5, **caractérisé par** un encodeur à commutation (104) associé à l'élément de liaison factice (100) pour identifier un connecteur de couplage (96) monté sur celui-ci.

7. Système d'alimentation en courant selon au moins l'une des revendications 1 à 6, **caractérisé en ce que** le câble de support (20) est composé d'une pluralité de fils métalliques et/ou de fibres synthétiques à haute résistance.

8. Système d'alimentation en courant selon au moins l'une des revendications 1 à 7, **caractérisé par** une chaîne porte-câble (114, 116) montée sur au moins l'une des deux stations de base (14, 18), le câble de support (20) étant fixé à une extrémité libre de la chaîne d'entraînement libre (114, 116), en particulier à l'aide de la poulie d'enroulement (54) selon la revendication 1 ou du moyen de liaison (90) selon la revendication 3.

9. Système d'alimentation en courant selon au moins l'une des revendications 1 à 8, **caractérisé par** un dispositif capteur (82, 84) pour détecter un tracé spatial du câble de support (20) par rapport à la première et/ou la deuxième station de base (14, 18), l'unité de contrôle (64) déduisant à partir du tracé spatial détecté du câble de support (20) l'orientation spatiale des véhicules de flotte (12, 16) les uns par rapport aux autres.

10. Système d'alimentation en courant selon au moins l'une des revendications 1 à 9, **caractérisé en ce que** les éléments de maintien (26-1, ..., 26-6) peuvent être escamotés sur la première station de base (14) après le décrochage du câble de transmission de courant (20).

11. Système d'alimentation en courant selon au moins l'une des revendications 1 à 10, **caractérisé en ce que** les éléments de maintien (26-1, ..., 26-6) peuvent être escamotés sur la première station de base (14) après le décrochage du câble de transmission de courant (20) au moyen d'un dispositif de rappel associé à une première station de base (14).

12. Flotte de véhicules comprenant au moins un premier et un deuxième véhicule de flotte (12, 16), les véhicules de flotte étant équipés d'un système d'alimentation en courant (10) selon au moins l'une des revendications 1 à 11.
